# NEUE EUROPÄISCHE PATENTSCHRIFT

(11) **EP 0 467 038 B2**
(45) Veröffentlichungstag und Bekanntmachung des Hinweises auf die Entscheidung über den Einspruch: **29.07.1998**
(45) Hinweis auf die Patenterteilung: 10.08.1994
(21) Anmeldenummer: 91108036.4
(22) Anmeldetag: 17.05.1991
(51) Int. Cl.: B23Q 11/10

(54) **Spindelkopfspeisung mit Sogeffekt**
Spindle head feeding with suction effect
Alimentation de broche avec effet de succion

(30) Priorität: 18.07.1990 DE 4022895
(43) Veröffentlichungstag der Anmeldung: 22.01.1992
(73) Patentinhaber: Hellmerich Werkzeugmaschinen Ges.m.b.H., A-9800 Spittal/Drau (AT)
(72) Erfinder: Kumnig, Franz, A-9872 Millstatt (AT)
(74) Vertreter: MANITZ, FINSTERWALD & PARTNER

(56) Entgegenhaltungen:
- EP-A- 0 126 793
- EP-A- 0 250 703
- DE-A- 1 913 231
- DE-A- 3 742 094
- DE-C- 919 026

## Beschreibung

Die Erfindung betrifft einen Spindelkopf gemäß dem Oberbegriff des Anspruchs 1.

Ein Spindelkopf dieser Art ist durch Vorbenutzung im Zusammenhang mit dem Verkauf eines solchen Spindelkopfes durch die Firma Küma Kühbauch + Maier Werkzeugmaschinenfabrik an die Firma Ex-Cell-O GmbH bekannt geworden.

Bei einem aus der DE-OS 37 42 094 bekannten Spindelkopf wird der Übergang des Kühl- und/oder Schmiermittels vom stationären Zuführorgan zum Axialkanal der Spindel mittels einer koaxial zwischen Zuführorgan und Spindel liegenden Spaltdichtung abgedichtet. Über diese Spaltdichtung tritt selbst bei einer sehr engen Ausgestaltung eine unvermeidliche Leckage auf, die mit zunehmendem Speisedruck größer wird und der an sich angestrebten Erhöhung dieses Speisedrucks unerwünschte Grenzen setzt und das Arbeiten mit erhöhten Nenndrücken verhindert. Weiterhin wirkt sich der durch die Rückströmung in der Spaltdichtung bewirkte hohe Leckverlust außerordentlich nachteilig hinsichtlich des Wirkungsgrades der Kühl- und/oder Schmiermittelspeisung aus.

Aufgabe der Erfindung ist es, einen Spindelkopf der eingangs angegebenen Art bei einfachem Aufbau so auszubilden, daß insbesondere auch bei unter hohem Druck zugeführtem Kühl- und/oder Schmiermittel auftretende Leckagen, Dichtungsbelastungen sowie Verschleißerscheinungen minimiert werden.

Durch eine derartige Ausbildung eines Spindelkopfes tritt im Bereich des Übertritts des Kühl- und/oder Schmiermittels vom Zuführorgan zum Axialkanal der Spindel ein Saugeffekt nach Art einer Wasserstrahlpumpe auf. Dieser Effekt wirkt sich dahingehend aus, daß in der Spaltdichtung ein Druckgefälle auftritt und im Spalt ein Sog entsteht, der einen Eintreten des Kühl- und/oder Schmiermittels in den Spalt entgegenwirkt und damit Leckagen minimiert. Als Folge davon kann auch mit hohen Speisedrücken gearbeitet werden, da der erzielbare Sogeffekt bei zunehmendem Speisedruck stärker ausgebildet auftritt und daher auch bei diesen hohen Drücken keine störende Leckageströmung in der Spaltdichtung entsteht.

Indem die Öffnung des Zuführorgans als Düse ausgebildet ist, werden der Wasserstrahlpumpeneffekt verstärkt und das Druckgefälle im Spalt vergrößert. Hierdurch lassen sich eventuell auftretende Leckströme noch weiter verringern.

Es wurde zwar bereits vorgeschlagen, bei einem Spindelkopf der im Oberbegriff des Anspruchs 1 angegebenen Art ein Zuführorgan vorzusehen, dessen freier Strömungsquerschnitt geringfügig kleiner ist als der freie Strömungsquerschnitt des Axialkanals der Spindel. Eine Ausbildung des Öffnungsbereichs des Zuführorgans als Düse war jedoch nicht vorgesehen. Das Zuführorgan besaß über seine gesamte in die Spindel eingreifende Länge einen durchgehend konstanten freien Strömungsquerschnitt. Zudem mündete der im Zuführorgan vorgesehene Kanal in einen sich konisch verjüngenden, mit dem Dichtungsspalt verbundenen Übergangsspalt, durch den das Kühl- bzw. Schmiermittel im kritischen Dichtspaltbereich zunächst wieder komprimiert wird, wodurch die Gefahr von Leckverlusten durch die Spaltdichtung erhöht wird.

In einer bevorzugten Ausführungsform der Erfindung können unterschiedliche Düsenarten, beispielsweise schraubbar, am Zuführorgan angebracht werden. So läßt sich eine optimale Abstimmung des für den Transport des KÜhl- und/oder Schmiermittels erforderlichen Drucks und des im Spalt zu erzeugenden Druckgefälles erreichen.

Die Erfindung wird im folgenden anhand der Figuren beschrieben; hierbei zeigt:
- Figur 1: einen Spindelkopf gemäß der Erfindung und
- Figur 2: eine Detailansicht des erfindungsgemäßen Spindelkopfes.

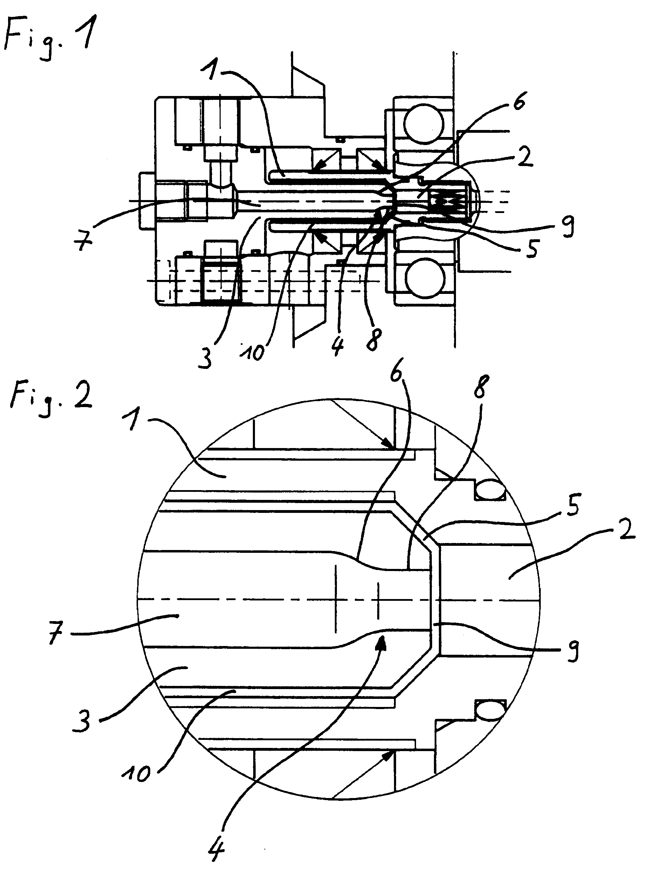

Figur 1 zeigt eine Spindel 1 und ein Zuführorgan 3, die unter Ausbildung eines koaxialen Spalts 10 ineinandergreifen. Die Spindel 1 weist einen Axialkanal 2 zum Transport des Kühl- und/oder Schmiermittels auf. Der freie Strömungsquerschnitt des im Zuführorgan 3 vorgesehenen Kanals 7 ist im Bereich des Übergangs in den Axialkanal 2 der Spindel 1 kleiner als der freie Strömungsquerschnitt des Axialkanals 2 der Spindel 1. Der im Zuführorgan 3 zylindrisch ausgebildete Kanal 7 besitzt mündungsseitig eine Drosselstelle 6, die in einen zylindrischen Endabschnitt 8 übergeht.

Die Größe des Übergangsspalts 9 zwischen dem freien Ende des Zuführorgans 3 und dem Axialkanal 2 der Spindel 1 ist im wesentlichen gleich der Radialerstreckung des Spalts 10 der koaxialen Spaltdichtung. Der Übergangsspalt 9 ist über einen kegelstumpfförmigen Spalt 5 mit dem in Axialrichtung verlaufenden Dichtspalt 10 verbunden. Die Öffnung 4 des Zuführorgans 3 ist als Düse ausgebildet.

Figur 2 zeigt eine Detailansicht des Übergangsbereiches des Kühl- und/oder Schmiermittels vom Zuführorgan 3 zum Axialkanal 2 der Spindel 1 gemäß Figur 1.

## Patentansprüche

1. Spindelkopf mit einer Anordnung zur Versorgung der jeweiligen Bohr- und/oder Schneidwerkzeuge mit Kühl- und/oder Schmiermittel, wobei die Spindel (1) mit einem über eine Öffnung eines stationären Zuführorgans (3) gespeisten Axialkanal (2) für den Transport des Kühl- und/oder Schmiermittels zum Werkzeug-Arbeitsbereich versehen ist, das Zuführorgan (3) und die Spindel (1) unter Ausbildung einer Spaltdichtung (10) koaxial ineinandergreifen und der freie Strömungsquerschnitt des Zuführorgans (3) zumindest im Bereich des Übergangs in den Axialkanal (2) der Spindel (1) kleiner ist als der freie Strömungsquerschnitt des Axialkanals (2) im Übergangsbereich,
dadurch **gekennzeichnet,**
daß der Öffnungsbereich (4) des Zuführorgans (3) als Düse ausgebildet ist.

2. Spindelkopf nach Anspruch 1,
dadurch **gekennzeichnet,**
daß der freie Strömungsquerschnitt des im Zuführorgan (3) vorgesehenen Kanals (7) im Bereich seines freien, an den Axialkanal (2) der Spindel (1) angrenzenden Endes um etwa 30 % bis 40 % verringert ist.

3. Spindelkopf nach einem der Ansprüche 1 oder 2,
dadurch **gekennzeichnet,**
daß der im Zuführorgan (3) vorgesehene, geradlinig zylindrische Kanal (7) über eine Drosselstelle (6) in einen mündungsseitigen, zylindrischen Endabschnitt (8) übergeht.

4. Spindelkopf nach Anspruch 3,
dadurch **gekennzeichnet,**
daß der Durchmesser des Endabschnittes (8) größer als dessen axiale Länge ist.

5. Spindelkopf nach einem der vorhergehenden Ansprüche,
dadurch **gekennzeichnet,**
daß der axiale Abstand zwischen dem freien Ende des Zuführorgans (3) und dem Axialkanal (2) der Spindel (1) zumindest im wesentlichen gleich der Radialerstreckung des Spalts (10) der Spaltdichtung ist.

6. Spindelkopf nach einem der vorhergehenden Ansprüche,
dadurch **gekennzeichnet,**
daß die Düse auswechselbar am Zuführorgan (3) befestigt ist.

7. Spindelkopf nach einem der vorhergehenden Ansprüche,
dadurch **gekennzeichnet,**
daß unterschiedliche Düsenarten am Zuführorgan (3) anbringbar sind.

8. Spindelkopf nach einem der vorhergehenden Ansprüche,
dadurch **gekennzeichnet,**
daß die Düse schraubbar mit dem Zuführorgan (3) verbunden ist.

9. Spindelkopf nach einem der vorhergehenden Ansprüche,
dadurch **gekennzeichnet,**
daß der Übergangsspalt (9) zwischen der Mündung des Zuführorgans (3) und dem Spindel-Axialkanal (2) über einen kegelstumpfförmigen Spalt (5) mit dem in Axialrichtung verlaufenden Dichtspalt (10) in Verbindung steht.

## Claims

1. Spindle head with an arrangement for the supply of the respective boring and/or cutting tools with coolant and/or lubricant, wherein the spindle (1) is provided with an axial channel (2) fed via an opening of a stationary supply member (3) for the transport of the coolant and/or lubricant to the tool working region, wherein the supply member (3) and the spindle (1) engage coaxially within one another while forming a gap seal (10), and the free flow cross section of the supply member (3) is smaller, at least in the region of the transition into the axial channel (2) of the spindle (1), than the free flow cross-section of the axial channel (2) in the transition region.
**characterised in that**
the opening region (4) of the supply member (3) is formed as a nozzle.

2. Spindle head in accordance with claim 1,
**characterised in that**
the free flow cross-section of the channel (7) provided in the supply member (3) is reduced in the region of its free end adjoining the axial channel (2) of the spindle (1) by about 30 to 40 %.

3. Spindle head in accordance with one of the claims 1 or 2,
**characterised in that**
the straight-line cylindrical channel (7) provided in the supply member (3) merges via a restrictor (6) into a cylindrical end section (8) at the mouth end.

4. Spindle head in accordance with claim 3,
**characterised in that**
the diameter of the end section (8) is larger than its axial length.

5. Spindle head in accordance with one of the preceding claims,
**characterised in that**
the axial spacing between the free end of the supply member (3) and the axial channel (2) of the spindle (1) is at least substantially the same as the radial extent of the gap (10) of the gap seal.

6. Spindle head in accordance with one of the preceding claims,
**characterised in that**
the nozzle is interchangeably secured to the supply member (3).

7. Spindle head in accordance with one of the preceding claims,
**characterised in that**
different nozzle types can be mounted on the supply member (3).

8. Spindle head in accordance with one of the preceding claims,
**characterised in that**
the nozzle is screwably connected to the supply member (3).

9. Spindle head in accordance with one of the preceding claims,
**characterised in that**
the transition gap (9) between the mouth of the supply member (3) and the axial channel (2) of the spindle communicates via a truncated cone-like gap (5) with the seal gap (10) which extends in the axial direction.

## Revendications

1. Tête de broche comprenant un système d'alimentation des outils de perçage et/ou de coupe concernés en fluide de refroidissement et/ou lubrifiant, la broche (1) étant pourvue d'un canal axial (2) qui est alimenté par une ouverture d'un organe d'amenée (3) fixe et est destiné à transporter le fluide de refroidissement et/ou le lubrifiant vers la zone de travail de l'outil et l'organe d'amenée (3) et la broche (1) s'engageant l'un dans l'autre de manière coaxiale avec formation d'un joint d'étanchéité à interstice (10), la section d'écoulement libre de l'organe d'amenée (3) étant plus petite au moins dans la région de raccordement au canal axial (2) de la broche (1) que la section d'écoulement libre du canal axial (2) dans la dite région de raccordement, caractérisée par le fait que la zone d'ouverture (4) de l'organe d'amenée (3) est agencée sous forme de buse.

2. Tête de broche selon la revendication 1, caractérisée par le fait que la section d'écoulement libre du canal (7) prévu dans l'organe d'amenée (3), dans la région de son extrémité libre adjacente au canal axial (2) de la broche (1), est diminuée d'environ 30 à 40%.

3. Tête de broche selon une des revendications 1 ou 2, caractérisée par le fait que le canal cylindrique (7) rectiligne prévu dans l'organe d'amenée (13) se raccorde au niveau d'un point d'étranglement (6) à une partie d'extrémité (8) cylindrique située côté embouchure.

4. Tête de broche selon la revendication 3, caractérisée par le fait que le diamètre de la partie d'extrémité (8) est plus grand que la longueur axiale de celle-ci.

5. Tête de broche selon une des revendications précédentes, caractérisée par le fait que la distance axiale entre l'extrémité libre de l'organe d'amenée (3) et le canal axial (2) de la broche (1) est au moins sensiblement égale à la dimension radiale de l'interstice (10) du joint.

6. Tête de broche selon une des revendications précédentes, caractérisée par le fait que la buse est fixée avec possibilité de remplacement à l'organe d'amenée (3)

7. Tête de broche selon une des revendications précédentes, caractérisée par le fait que différents types de buses peuvent être fixés sur l'organe d'amenée (3).

8. Tête de broche selon une des revendications précédentes, caractérisée par le fait que la buse est liée par vissage à l'organe d'amenée (3)

9. Tête de broche selon une des revendications précédentes, caractérisée par le fait que l'interstice de raccordement (9) entre l'embouchure de l'organe d'amenée (3) et le canal axial (2) de la broche communique par un interstice (5) tronconique avec l'interstice d'étanchéité (10) s'étendant dans la direction axiale.
